Europäisches Patentamt

European Patent Office

Office européen des brevets

(11) Numéro de publication: **0 315 885 B1**

# FASCICULE DE BREVET EUROPEEN

(45) Date de publication de fascicule du brevet: **17.03.93**

(51) Int. Cl.⁵: **B60C 23/00**, B60C 23/20

(21) Numéro de dépôt: **88118219.0**

(22) Date de dépôt: **02.11.88**

(54) **Procédé d'exploitation des mesures de pression et de temperature dans un dispositif de surveillance des pneumatiques.**

(30) Priorité: **09.11.87 FR 8715611**

(43) Date de publication de la demande:
**17.05.89 Bulletin 89/20**

(45) Mention de la délivrance du brevet:
**17.03.93 Bulletin 93/11**

(84) Etats contractants désignés:
**AT BE CH DE ES FR GB GR IT LI LU NL SE**

(56) Documents cités:
**WO-A-85/03675**
**WO-A-87/00127**

**INGENIEURS DE L'AUTOMOBILE, no. 8, novembre 1984, pages 86-91, Paris, FR; MM.G. BEGHIN et al.: "Mesure de pression et surveillance de pneumatiques"**

(73) Titulaire: **COMPAGNIE GENERALE DES ETA-BLISSEMENTS MICHELIN-MICHELIN & CIE**
**4, rue du Terrail**
**F-63000 Clermont-Ferrand(FR)**

(72) Inventeur: **Herbert, Jacques**
**52, rue du Docteur Kurzenne**
**F-78350 Jouy-en-Josas(FR)**

(74) Mandataire: **Bauvir, Jacques et al**
**Michelin & Cie Service K. Brevets**
**F-63040 Clermont-Ferrand Cédex (FR)**

# Description

La présente invention se rapporte aux sytèmes de surveillances des pneumatiques. Plus particulièrement, elle concerne l'exploitation des mesures faites sur les pneumatiques en vue de donner une ou plusieurs alarmes.

La demande de brevet W0 87/00127 décrit un dispositif de codage utilisable pour la transmission de la pression et de la température d'un pneumatique depuis la roue vers le véhicule. Lorsque sur un véhicule, on effectue une mesure de température d'un pneumatique, en vue de sa surveillance permanente, il est difficile de mesurer la température exacte de l'air de gonflage du pneumatique. Or c'est de cette température dont on a besoin pour surveiller très exactement le pneumatique. On peut effectuer une correction de pression en fonction de la température. Ou bien on peut surveiller le rapport de la température absolue divisée par la pression absolue car c'est ce rapport, proportionnel en première approximation un nombre de môles, qui doit rester constant en dehors de toute fuite du fluide de gonflage du pneumatique.

Le capteur de température subit l'influence perturbatrice de la température de la jante sur laquelle le pneumatique est monté. Dans la quasi totalité des véhicules, cette jante entoure les organes de freinage. En cas de sollicitation intensive, ceux-ci dissipent une importante quantité de calories. Il en résulte une erreur par excès sur la température relevée par rapport à la température réelle de l'air interne. En dehors des manoeuvres de freinage, la jante est la plupart du temps à une température inférieure à la température interne du pneumatique, d'où une erreur par défaut.

D'autres causes perturbent également l'estimation de la quantité d'air (nombre de môles) dans les pneumatiques. Ainsi, en virage, les pneumatiques extérieurs au virage subissent un écrasement, donc une diminution de volume, donc une augmentation de pression, alors que l'inverse se produit pour les pneumatiques de côté opposé. Là encore, il peut en résulter des erreurs par excès ou par défaut sur le nombre de môles calculé.

La présente invention a pour objectif de tenir compte de ces causes perturbatrices sans recourir à des capteurs supplémentaires. Il s'agit donc de pouvoir décider de façon opportune et rapide si un pneumatique ou plus généralement un ensemble tournant se trouve dans un état anormal.

Selon l'invention, le procédé d'exploitation des signaux dans un système de surveillance des pneumatiques d'un véhicule, ledit système délivrant au moins une mesure de la pression et de la température relevées pour chacun des pneumatiques, est caractérisé en ce que, sur la base des valeurs de pression et de température relevées sensiblement au même moment dans chacun des pneumatiques,

- on calcule, pour chaque pneumatique, l'estimateur du nombre de môles en effectuant l'opération "pression absolue divisée par la température absolue",
- on compare cet estimateur calculé pour un pneumatique avec au moins le même estimateur calculé pour un autre pneumatique du véhicule, au moyen d'opérations algébriques choisies parmi les sommes, différences, rapports, produits, et combinaisons de cesdites opérations et on donne une alarme lorsque le résultat de cette comparaison s'écarte d'une valeur déterminée expérimentalement.

Dans la suite, on décrit plus en détails de quelle façon l'invention peut être mise en oeuvre dans un véhicule de tourisme, sans qu'il ne faille interpréter les indications données comme limitatives.

On implante sur chacune des roues des capteurs de pression et de température du pneumatique, ainsi que les éléments nécessaires pour recueillir une mesure de ces paramètres (et non pas seulement détecter un seuil) et les éléments nécessaires pour transmettre les valeurs mesurées à bord du véhicule. On peut utiliser tout dispositif approprié, tel que, par exemple, celui de la demande de brevet W0 87/00127.

Sur le véhicule, on implante un décodeur adapté au type de codage, pour disposer des valeurs mesurées de la pression absolue P et de la température absolue T pour chaque pneumatique. On calcule en permanence les estimateurs P/T pour chaque roue. L'indicateur de crevaison N est une fraction de deux sommes. De préférence, pour un véhicule à quatre pneumatiques, tel qu'une voiture de tourisme, on calcule N de la façon suivante :

$$N = \frac{\left(\frac{P}{T}\right)_{AVG} + \left(\frac{P}{T}\right)_{ARD}}{\left(\frac{P}{T}\right)_{AVD} + \left(\frac{P}{T}\right)_{ARG}}$$

où les indices ont la signification suivante :

AVG signifie que l'estimateur P/T est celui du pneumatique avant gauche

AVD signifie que l'estimateur P/T est celui du pneumatique avant droit

ARG signifie que l'estimateur P/T est celui du pneumatique arrière gauche

ARD signifie que l'estimateur P/T est celui du pneumatique arrière droit

On construit ainsi un indicateur de crevaison dit "en croix" par analogie avec la manière d'effectuer la comparaison entre les quatre estimateurs pour la surveillance d'ensemble d'un véhicule de tourisme.

On peut également construire un indicateur de crevaison dit "parallèle", où l'on trouverait en numérateur la somme des rapports relatifs aux pneumatiques d'un côté et en dénominateur la somme des rapports relatifs aux pneumatiques de l'autre côté. On peut également construire des indicateurs comparant deux pneumatiques seulement pour un essieu, ou pour un côté du véhicule, en effectuant un rapport ou une différence d'estimateurs.

Pour un véhicule à plus de deux essieux, on peut calculer par exemple des sommes ayant le même nombre de termes qu'il y a d'essieux. On calcule un indicateur "parallèle" en restant du même côté à chaque changement d'essieu, pour construire chaque somme, ou un indicateur "en croix" en changeant de côté à chaque changement d'essieu, pour construire chaque somme.

Pour un véhicule à deux essieux, les meilleurs résultats sont obtenus avec un indicateur "en croix". C'est celui qui, outre une bonne insensibilité aux calories dégagées par les freins, rejette le mieux les perturbations provoquées par d'autres paramètres (par exemple les transferts de charge, la charge statique, l'effet de la force centrifuge sur les capteurs).

En recourant à un microprocesseur, on peut ainsi obtenir en temps réel les estimateurs P/T pour tous les pneumatiques, puis on calcule l'indicateur "en croix" N. La valeur filtrée de celui-ci, sur une période de temps $t_1$, de l'ordre de deux secondes, permet de rejeter toutes les fluctuations très brèves dont la fréquence est inférieure à une valeur correspondant sensiblement au tour d'une roue. Ainsi, cet indicateur permet de savoir très rapidement qu'il existe un état anormal dans l'un des pneumatiques. Très rapidement signifie très peu de temps après l'apparition effective de l'anomalie, par exemple la crevaison. Ceci se fait au seul préjudice de l'identification du pneumatique défaillant, devenue impossible. Cependant, la surveillance se fait sans préjudice de la rapidité et en gardant le bénéfice de la précision des mesures effectuées sur les pneumatiques. Or l'aptitude d'un système de surveillance des pneumatiques à être rapide est fondamentale pour les véhicules à hautes performances. Avec un tel indicateur, le seuil d'alerte peut être abaissé à une valeur qui permet de conserver le bénéfice de la précision des capteurs, des circuits de codage et de décodage. Par exemple, on peut lancer une alarme si $N - 1 \geq 2$ %. La valeur de ce seuil d'alarme doit être déterminée expérimentalement, compte tenu notamment du type d'indicateur construit et du type de véhicule. En surveillant individuellement les pneumatiques, on est conduit à relever le seuil d'alarme au delà de 10 %, sous peine de donner des fausses alarmes, en particulier pour les pneumatiques avant, à cause de l'influence prédominante des freins, et du fait que dans ce cas, on est contraint de tenir compte de la pire des hypothèses d'utilisation du véhicule pour choisir le seuil.

On peut compléter très utilement le procédé d'exploitation de signaux décrit pour, le cas échéant même après un intervalle de temps plus long, être capable d'identifier le pneumatique concerné et d'activer une seconde alarme.

Par exemple, on calcule le rapport N comme ci-dessus (valeur filtrée pendant l'intervalle de temps $t_1$) et on calcule les valeurs filtrées pendant l'intervalle de temps $t_2$ des rapports suivants :

$$NV = \left(\frac{P}{T}\right)_{AVG} \left(\frac{T}{P}\right)_{AVD}$$

$$NR = \left(\frac{P}{T}\right)_{ARG} \left(\frac{T}{P}\right)_{ARD}$$

$$NG = \left(\frac{P}{T}\right)_{AVG} \left(\frac{T}{P}\right)_{ARG}$$

$$ND = \left(\frac{P}{T}\right)_{AVD} \left(\frac{T}{P}\right)_{ARD}$$

Puis :
- on donne une alarme relative au pneumatique avant gauche si N-1 >x et/ou si NV-1 >y et/ou si NG-1 >z, x, y et z étant des pourcentages déterminés expérimentalement,
- on donne une alarme relative au pneumatique avant droit si N-1 >x et/ou si NV-1 >y, et/ou si ND-1 >z
- on donne une alarme relative au pneumatique arrière gauche si N-1 >x et/ou si NR-1 >y et/ou si NG-1 >z,
- on donne une alarme relative au pneumatique arrière droit si |N-1|>x et/ou si |NR-1| >y et/ou si |ND-1| >z.

D'une autre manière, on peut surveiller l'estimateur P/T individuellement pour chaque roue et donner une alarme en cas de dépassement de seuil, ledit seuil étant non plus fixe, mais calculé en permanence en fonction de la valeur d'un indicateur construit selon le principe exposé. Ou encore, en fonction de la valeur d'un indicateur, on adapte le seuil d'un autre indicateur. A titre d'illustration, on a remarqué que, sur un véhicule de tourisme, l'indicateur "essieu parallèle" (rapport des sommes des estimateurs des roues pour chaque essieu) rend très bien compte de la sollicitation des freins. On peut donc relever les seuils d'alarmes pour les pneumatiques avant seulement lorsque la sollicitation par les freins est importante, ou du moins en tenir compte de quelque manière que ce soit.

**Revendications**

1. Procédé d'exploitation des signaux dans un système de surveillance des pneumatiques d'un véhicule, ledit système délivrant au moins une mesure de la pression et de la température relevées pour chacun des pneumatiques, caractérisé en ce que, sur la base des valeurs de pression et de température relevées sensiblement au même moment dans chacun des pneumatiques,
   - on calcule, pour chaque pneumatique, l'estimateur du nombre de môles en effectuant l'opération "pression absolue divisée par la température absolue",
   - on compare cet estimateur calculé pour un pneumatique avec au moins le même estimateur calculé pour un autre pneumatique du véhicule, au moyen d'opérations algébriques choisies parmi les sommes, différences, rapports, produits et combinaisons de cesdites opérations et on donne une alarme lorsque le résultat de cette comparaison s'écarte d'une valeur déterminée expérimentalement.

2. Procédé selon la revendication 1, caractérisé en ce que ladite comparaison est établie de la manière suivante :
   - on effectue la somme $S_1$ dudit rapport pour un pneumatique d'un premier essieu et d'au moins ledit rapport pour un pneumatique d'un autre essieu,
   - on effectue la somme $S_2$ dudit rapport pour l'autre pneumatique dudit premier essieu et d'au moins ledit rapport pour un pneumatique d'un autre essieu, lesdites sommes $S_1$ et $S_2$ ayant le même nombre de termes,
   - on calcule $N = S_1/S_2$
   - on donne une alarme lorsque $|N-1|$ est supérieur à un pourcentage x déterminé expérimentalement.

3. Procédé selon la revendication 1, caractérisé en ce que ladite comparaison est établie de la manière suivante :

   - on calcule

$$N = \frac{\left(\frac{P}{T}\right)_{AVG} + \left(\frac{P}{T}\right)_{ARD}}{\left(\frac{P}{T}\right)_{AVD} + \left(\frac{P}{T}\right)_{ARG}}$$

   où
   P est la pression absolue,
   T est la température absolue,
   les indices spécifiant l'origine des valeurs considérées :
   . AVG signifiant le penumatique avant gauche,
   . AVD signifiant le pneumatique avant droit,
   . ARG signifiant le pneumatique arrière gauche,
   . ARD signifiant le pneumatique arrière droit,
   - et l'on donne une alarme lorsque $|N-1|$ est supérieur à un pourcentage x déterminé expérimentalement.

4. Procédé selon la revendication 3, dans lequel on utilise la valeur filtrée dudit rapport N pendant l'intervalle de temps $t_1$ caractérisé en ce que
   - on calcule la valeur filtrée pendant l'intervalle de temps $t_2$, avec $t_2 > t_1$, des indicateurs suivants :

$$NV = \left(\frac{P}{T}\right)_{AVG} \left(\frac{T}{P}\right)_{AVD}$$

$$NR = \left(\frac{P}{T}\right)_{ARG} \left(\frac{T}{P}\right)_{ARD}$$

$$NG = \left(\frac{P}{T}\right)_{AVG} \left(\frac{T}{P}\right)_{ARG}$$

$$ND = \left(\frac{P}{T}\right)_{AVD} \left(\frac{T}{P}\right)_{ARD}$$

   - on donne une alarme relative au pneumatique avant gauche si $|N-1| > x$ et/ou si $|NV-1| > y$ et/ou si $|NG-1| > z$, y et z étant les pourcentages déterminés expérimentalement,

- on donne une alarme relative au pneumatique avant droit si |N-1|>x et/ou si |NV-1|>y, et/ou si |ND-1|>z
- on donne une alarme relative au pneumatique arrière gauche si |N-1|>x et/ou si |NR-1|>y et/ou si |NG-1|>z,
- on donne und alarme relative au pneumatique arrière droit si |N-1|>x et/ou si |NR-1|>y et/ou si |ND-1|>z.

## Claims

1. Process for using signals in a system for monitoring tires of a vehicle, said system delivering at least one measurement of the pressure and temperature read for each tire, characterized in that, on the basis of the pressure and temperature values read approximately at the same moment in each of the tires,

    -- the estimator of the number of moles is calculated for each tire by performing the operation "absolute pressure divided by absolute temperature,"

    -- this estimator calculated for one tire is compared with at least the same estimator calculated for another tire of the vehicle, by means of algebraic operations selected from sums, differences, ratios, products and combinations of these operations and an alarm is given when the result of this comparison deviates from a value determined experimentally.

2. Process according to claim 1, characterized by the fact that said comparison is made as follows:

    -- the sum S1 of said ratio for a tire of a first axle and at least said ratio for a tire of another axle is determined,

    -- the sum S2 of said ratio for the other tire of said first axle and at least said ratio for a tire of another axle is determined, said sums S1 and S2 having the same number of terms,

    -- N = S1/S2 is calculated,

    -- an alarm is given when |N-1| is greater than a percentage x determined experimentally.

3. Process according to claim 1, characterized by the fact that said comparison is established as follows:

-- a calculation is made of

$$N = \frac{\frac{P}{T}_{AVG} + \frac{P}{T}_{ARD}}{\frac{P}{T}_{AVG} + \frac{P}{T}_{ARG}}$$

where

P is the absolute pressure,

T is the absolute temperature,

the subscripts specifying the origin of the values considered:

AVG meaning the left front tire,

AVD meaning the right front tire,

ARG meaning the left rear tire,

ARD meaning the right rear tire,

an alarm is given when |N-1| is greater than a percentage x determined experimentally.

4. Process according to claim 3, in which use is made of the filtered value of said ratio N during period t1, characterized by the fact that

    -- the value filtered during period t2, with t2 > t1, is calculated for the following indicators:

$$NV = \frac{P}{T_{AVG}} \quad \frac{P}{T_{AVD}}$$

$$NR = \frac{P}{T_{ARG}} \quad \frac{P}{T_{ARD}}$$

$$NG = \frac{P}{T_{AVG}} \quad \frac{P}{T_{ARG}}$$

$$ND = \frac{P}{T_{AVD}} \quad \frac{P}{T_{ARD}}$$

    -- an alarm relative to the left front tire is given if |N-1|>x and/or if |NV-1|>y and/or if |NG-1|z, y and z being percentages determined experimentally,

    -- an alarm relative to the right front tire is given if |N-1|> x and/or if |NV-1|>y, and/or if

|ND-1|>z
-- an alarm relative to the left rear tire is given if |N-1|>x and/or if |NR-1|>y and/or if |NG-1|>z,
-- an alarm relative to the right rear tire is given if |N-1|>x and/or if |NR-1|>y and/or if |ND-1|>z.

## Patentansprüche

1. Verfahren zur Signalauswertung in einem System zur Überwachung der Luftreifen eines Fahrzeugs, wobei das System mindestens einen Meßwert für den Druck sowie für die Temperatur liefert und die Meßwerte für jeden der Luftreifen erhalten werden,

   **dadurch gekennzeichnet**, daß,

   auf der Basis der etwa zum gleichen Zeitpunkt erhaltenen Meßwerte des Drucks und der Temperatur in jedem der Reifen,
   - für jeden Reifen ein Schätzwert der Molzahl durch Vornahme der Rechenoperation "absoluter Druck geteilt durch die absolute Temperatur" berechnet wird und
   - dieser für einen Reifen berechnete Schätzwert mit mindestens dem gleichen, für einen anderen Reifen des Fahrzeugs berechneten Schätzwert mittels Rechenoperationen verglichen wird, die unter Summationen, Differenzbildungen, Verhältnisbildungen, Produktbildungen und Kombinationen dieser Rechenoperationen ausgewählt sind, und ein Alarm gegeben wird, wenn das Ergebnis dieses Vergleichs von einem experimentell bestimmten Wert abweicht.

2. Verfahren nach Anspruch 1, dadurch gekennzeichnet, daß der Vergleich wie folgt durchgeführt wird:
   - Berechnen der Summe $S_1$ des genannten Verhältnisses für einen Reifen einer ersten Achse und mindestens dieses Verhältnisses für einen Reifen einer anderen Achse,
   - Berechnen der Summe $S_2$ des genannten Verhältnisses für den anderen Reifen der ersten Achse und mindestens dieses Verhältnisses für einen Reifen einer andere Achse, wobei diese Summen $S_1$ und $S_2$ die gleiche Anzahl Terme aufweisen,
   - Berechnen von $N = S_1/S_2$ und
   - Auslösen eines Alarms, wenn |N-1| größer ist als ein experimentell bestimmter Prozentwert x.

3. Verfahren nach Anspruch 1, dadurch gekennzeichnet, daß der Vergleich wie folgt durchgeführt wird:

$$N = \frac{\left(\frac{P}{T}\right)_{AVG} + \left(\frac{P}{T}\right)_{ARD}}{\left(\frac{P}{T}\right)_{AVD} + \left(\frac{P}{T}\right)_{ARG}},$$

   - Berechnen von
   wobei
   P     den absoluten Druck und
   T     die absolute Temperatur bedeuten, und die Indices die Herkunft der herangezogenen Werte angeben,
   wobei
   .   AVG den Reifen vorn links,
   .   AVG den Reifen vorn rechts,
   .   ARG den Reifen hinten links und
   .   ARD den Reifen hinten rechts bezeichnen,
   und
   - Auslösen eines Alarms, wenn |N-1| größer ist als ein experimentell bestimmter Prozentwert x.

4. Verfahren nach Anspruch 3, wobei der während des Zeitintervalls $t_1$ gefilterte Wert des Verhältnisses N verwendet wird,

   **gekennzeichnet** durch
   - Berechnen des während des Zeitintervalls $t_2$ mit $t_2 > t_1$ gefilterten Wertes folgender Indikatoren:

$$NV = \left(\frac{P}{T}\right)_{AVG} \left(\frac{T}{P}\right)_{AVD}$$

$$NR = \left(\frac{P}{T}\right)_{ARG} \left(\frac{T}{P}\right)_{ARD}$$

$$NG = \left(\frac{P}{T}\right)_{AVG} \left(\frac{T}{P}\right)_{ARG}$$

$$ND = \left(\frac{P}{T}\right)_{AVD} \left(\frac{T}{P}\right)_{ARD} \quad ,$$

- Auslösen eines Alarms bezüglich des Reifens vorn links, wenn $|N-1|>x$ und/oder wenn $|NV-1|>y$ und/oder wenn $|NG-1|>z$ sind, wobei y und z experimentell bestimmte Prozentwerte sind,
- Auslösen eines Alarms bezüglich des Reifens vorn rechts, wenn $|N-1|>x$ und/oder wenn $|NV-1|>y$ und/oder wenn $|ND-1|>z$ sind,
- Auslösen eines Alarms bezüglich des Reifens hinten links, wenn $|N-1|>x$ und/oder wenn $|NR-1|>y$ und/oder wenn $|NG-1|>z$ sind, und
- Auslösen eines Alarms bezüglich des Reifens hinten rechts, wenn $|N-1|>x$ und/oder wenn $|NR-1|>y$ und/oder wenn $|ND-1|>z$ sind.